# EUROPÄISCHE PATENTSCHRIFT

(11) **EP 3 345 065 B1**
(45) Veröffentlichungstag und Bekanntmachung des Hinweises auf die Patenterteilung: **03.11.2021**
(21) Anmeldenummer: 16762767.8
(22) Anmeldetag: 02.09.2016
(51) Int. Cl.: G05D 1/02

(54) **IDENTIFIZIERUNG UND LOKALISIERUNG EINER BASISSTATION EINES AUTONOMEN MOBILEN ROBOTERS**
IDENTIFICATION AND LOCATING OF A BASE STATION OF AN AUTONOMOUS MOBILE ROBOT
IDENTIFICATION ET LOCALISATION D'UNE BASE DE CHARGE DE ROBOT MOBILE AUTONOME

(30) Priorität: 04.09.2015 DE 102015114883
(43) Veröffentlichungstag der Anmeldung: 11.07.2018
(73) Patentinhaber: Robart GmbH, 4020 Linz (AT)
(72) Erfinder: VOGEL, Reinhard, 4020 Linz (AT); ARTES, Harald, 4020 Linz (AT); FREUDENTHALER, Christoph, 4020 Linz (AT); LENHARDT, Fabian, 4020 Linz (AT)
(74) Vertreter: Westphal, Mussgnug & Partner, Patentanwälte mbB
(86) Internationale Anmeldenummer: PCT/EP2016/070761
(87) Internationale Veröffentlichungsnummer: WO 2017/037257

(56) Entgegenhaltungen:
- US-A1- 2014 100 693
- S OH ET AL: "Autonomous Battery Recharging for Indoor Mobile Robots", MASSACHUSSETS INSTITUTE OF TECHNOLOGY PRESS, 30. August 2000 (2000-08-30), XP055321836,
- R Siegwart: "introduction to autonomous mobile robots", , 2004, XP055054850, Massachusetts ISBN: 978-0-26-219502-7 Gefunden im Internet: URL:http://www.robotee.com/EBooks/Introduc tion_to_Autonomous_Mobile_Robots.pdf
- Anonymous: "LMS200/211/221/291 Laser Measurement Systems", , 1 January 2007 (2007-01-01), pages 1-48, XP055581229, Retrieved from the Internet: URL:http://sicktoolbox.sourceforge.net/doc s/sick-lms-technical-description.pdf [retrieved on 2019-04-15]

## Beschreibung

### TECHNISCHES GEBIET

Die Erfindung betrifft ein Verfahren zum Identifizieren und Lokalisieren einer Basisstation eines autonomen mobilen Roboters durch den Roboter. Darüber hinaus wird beschrieben, wie die Basisstation zur Kalibrierung eines Sensors des Roboters genutzt und wie das Andockmanöver verbessert werden kann.

### HINTERGRUND

In den letzten Jahren finden autonome mobile Roboter, insbesondere Serviceroboter, zunehmend Verwendung im Haushaltsbereich, beispielsweise zur Reinigung oder zur Überwachung einer Wohnung. Wenn diese Roboter keine Arbeit zu verrichten haben, so sind sie in der Regel an einer Basisstation angedockt. Diese ermöglicht beispielsweise das Aufladen einer Batterie, die Reinigung eines Schmutzauffangbehälters oder das Auffüllen eines Reinigungsmittels des Roboters durch die Basisstation. Für eine vollständig autonome Arbeitsweise des Roboters ist das zuverlässige Wiederauffinden der Basisstation wichtig. Für die beschriebenen Aufgaben sind verschiedene Lösungen bekannt. Die Publikationen US20090281661 A1 und US20140100693 A enthalten Hintergrundinformationen zu diesem Thema. Beispielsweise beschreibt die Publikation US20140100693 A die Verwendung von Markierungen (*fiducial marker*) wie beispielsweise Barcodes. Die Publikation Seungjun Oh et al., "Autonomous Battery Recharging for Indoor Mobile Robots", Proc. of Australian Conference on Robotics and Automation (ACRA 2000), beschreibt ein System mit einem mobilen Roboter und einer Basisstation, welche über ein "Gitter" (*grid*) verfügt, das für einen Laser-Range-Finder detektierbar ist. Das Gittermuster (*grid pattern*) wird dazu verwendet, um den Roboter präzise an der Basisstation anzudocken.

Ganz allgemein besteht die der Erfindung zugrunde liegende Aufgabe darin, bekannte Verfahren zum Identifizieren und Lokalisieren einer Roboterbasisstation durch den Roboter sowie Verfahren zum Andocken an eine Basisstation zu vereinfachen oder zu verbessern.

Die oben genannte Aufgabe wird durch ein System gemäß Anspruch 1 gelöst. Verschiedene Ausführungsformen und Weiterentwicklungen der Erfindung sind Gegenstand der abhängigen Ansprüche.

Im Folgenden wird ein System mit einem autonomen mobilen Roboter und einer Basisstation für den Roboter beschrieben. Gemäß einem Beispiel der Erfindung weist dabei der Roboter ein Navigationsmodul mit einem Navigationssensor zum Erfassen von geometrischen Merkmalen von Objekten in der Umgebung des Roboters auf Die Basisstation weist mindestens eine geometrisches Merkmal (Feature) auf, welches basierend auf berührungslose Messung von Abständen von dem Navigationssensor erfasst werden kann. Der Roboter umfasst eine mit dem Navigationsmodul gekoppelte Robotersteuerung, die dazu ausgebildet ist, basierend auf dem mindestens einen geometrischen Merkmal der Basisstation die Basisstation zu identifizieren und/oder zu lokalisieren und/oder eine Andockposition des Roboters zu bestimmen. Die Basisstation weist mindestens eine Öffnung in ihrer Gehäusewand auf. Das mindestens eine geometrische Merkmal ist mindestens durch eine Größe der Öffnung definiert.

Es wird auch eine Basisstation für einen mobilen Roboter beschrieben. Die Basisstation weist ein Gehäuse mit mindestens einer darin angeordneten Öffnung auf welche aufgrund ihrer geometrischen Gestalt mindestens ein von einer Sensorik des Roboters detektierbares geometrisches Merkmal definiert. Die Basisstation weist eine Abdeckung auf, welche aus einem für den Navigationssensor transparenten Material besteht und die mindestens eine Öffnung abdeckt.

Des Weiteren wird ein Verfahren für einen autonomen mobilen Robote beschrieben. Gemäß einem Beispiel umfasst das Verfahren das Erfassen von geometrischen Merkmalen von Objekten in der Umgebung des Roboters mittels eines Navigationsmoduls des Roboters, das einen Navigationssensor aufweist. Mindestens eines der erfassten Objekte ist dabei ein geometrisches Merkmal der Basisstation. Das Verfahren umfasst des Weiteren das Identifizieren und/oder Lokalisieren der Basisstation basierend auf dem mindestens einen geometrischen Merkmal der Basisstation.

Gemäß einem weiteren Beispiel eines Systems mit einem autonomen mobilen Roboter und einer Basisstation weist der der Roboter ein Navigationsmodul mit einem Navigationssensor zum Erfassen von geometrischen Merkmalen von Objekten in der Umgebung des Roboters auf. Die Basisstation umfasst mindestens eine geometrisches Merkmal, welches mittels des Navigationssensors für den Roboter erfassbar ist. Das Navigationsmodul ist dazu ausgebildet, den Navigationssensor mit Hilfe des erfassten mindestens einen geometrischen Merkmals der Basisstation zu testen und/oder zu kalibrieren.

Weitere Beispiele betreffen Verfahren für einen autonomen mobilen Roboter. Gemäß einem Beispiel umfasst ein Verfahren das Erfassen von geometrischen Merkmalen von Objekten in der Umgebung des Roboters mittels eines Navigationsmoduls des Roboters, das einen Navigationssensor aufweist, wobei mindestens eines der erfassten Merkmale ein geometrisches Merkmal der Basisstation. Der Navigationssensor wird mit Hilfe des mindestens einen geometrischen Merkmals der Basisstation kalibriert und/oder getestet.

Ein weiteres Verfahren dient zum Andocken eines autonomen, mobilen Roboters an eine Basisstation. Gemäß einem Beispiel der Erfindung umfasst das Verfahren das Ermitteln einer Andockposition des Roboters an der Basisstation, wobei die Andockposition einen Ort und eine Orientierung des Roboters umfasst, sowie das Navigieren des Roboters in die Andockposition. Danach wird geprüft, ob das der Roboter korrekt an der Basisstation angedockt hat. Falls nicht, wird die Position des Roboters variiert und erneut geprüft, ob das der Roboter korrekt an die Basisstation angedockt hat. Das Variieren und Prüfen erfolgt solange, bis die Prüfung erfolgreich ist oder ein Abbruchkriterium erfüllt ist.

Gemäß einem weiteren Beispiel umfasst ein Verfahren zum automatischen Andocken eines autonomen, mobilen Roboters an eine Basisstation das Detektieren von Hindernissen mittels eines Navigationsmoduls des Roboters, das einen Navigationssensor aufweist, sowie das Prüfen, ob in einem definierten Gebiet um die Basisstation der Zugang zur Basisstation für den Roboter durch detektierte Hindernisse behindert wird. Eine Störung wird über eine Benutzerschnittstelle mitgeteilt, wenn die Prüfung ergibt, dass der Zugang zur Basisstation für den Roboter behindert wird.

Ein weiteren beispielhaftes Verfahren für einen autonomen mobilen Roboter umfasst das Erfassen von geometrischen Merkmalen von Objekten in der Umgebung des Roboters mittels eines Navigationsmoduls des Roboters, das einen Navigationssensor aufweist sowie das Navigieren des Roboters basierend zumindest einem der der erfassten geometrischen Merkmale und einer elektronischen Karte des Einsatzgebietes des Roboters. Dabei ist in der elektronischen Karte die Position einer Basisstation des Roboters verzeichnet. Das Verfahren umfasst des Weiteren das Prüfen, ob die erfassten geometrischen Merkmale ein geometrisches Merkmal enthalten, welches mit der Basisstation verknüpft ist. Falls ja, wird die aktuellen Position der Basisstation basierend auf dem mit der Basisstation verknüpften geometrischen Merkmal ermittelt und die Position der Basisstation in der elektronischen Karte aktualisiert. Alternativ kann die Basisstation auch auf andere Weise erkannt und lokalisiert werden, um deren Position in der Karte des Roboters zu aktualisieren

Ein weiteres Beispiel eines Verfahren für einen autonomen mobilen Roboter umfasst das Erfassen von geometrischen Merkmalen von Objekten in der Umgebung des Roboters mittels eines Navigationsmoduls des Roboters, das einen Navigationssensor aufweist, sowie das Navigieren des Roboters basierend auf zumindest einem der der erfassten geometrischen Merkmale und einer elektronischen Karte des Einsatzgebietes des Roboters. Dabei ist in der elektronischen Karte die Position einer Basisstation des Roboters verzeichnet. Gemäß dem Verfahren wird ein erstes geometrisches Merkmal, das nicht durch die Basisstation definiert wird, mit der Position der Basisstation verknüpft. Dieses erste geometrischen Merkmal wird in einem SLAM-Algorithmus mitgeführt (tracking), wobei eine Position des ersten geometrischen Merkmals in der elektronischen Karte aktuell gehalten wird und die Position der Basisstation als Relativposition relativ zur Position des ersten geometrischen Merkmals gespeichert wird.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt einen Roboter mit einer Basisstation in seinem Robotereinsatzgebiet.
Figur 2 zeigt anhand einer Skizze schematisch die optische Abstandsmessung mittels Triangulation.
Figur 3 zeigt ein Beispiel einer Basisstation mit vom Navigationssensor des Roboters detektierbaren geometrischen Merkmalen, welche durch Öffnungen in der vorderen Gehäusewand der Basisstation definiert werden.
Figur 4 illustriert die Detektion der geometrischen Merkmale einer Basisstation mit Hilfe des Navigationssensors des Roboters sowie mögliche systematische Messfehler.
Figur 5 illustriert ein Verfahren zum Andocken eines Roboters an einer Basisstation, wobei der Roboter seine Orientierung solange variiert, bis korrekt angedockt wurde.

### DETAILLIERTE BESCHREIBUNG

Ganz allgemein sollte ein mobiler Roboter zuverlässig und sicher an seine Basisstation andocken können. Bekannten Systeme (Basisstation und Roboter) und Verfahren zum Finden und Erkennen einer Basisstation und ihrer genauen Position und Orientierung verwenden häufig spezielle Sensoren im Roboter (z.B. einen Leitstrahl), komplexe Bildverarbeitungsalgorithmen, die zusätzlich zu den Navigationsalgorithmen ausgeführt werden müssen, und/oder spezielle Markierungen an der Basisstation oder im Robotereinsatzgebiet. Des Weiteren sollte das Lokalisieren der Basisstation und das Andocken des Roboters an die Basisstation robust gegen verschiedenste Störungen sein. Beispielsweise können Verschiebungen der Basisstation eine zuverlässige Lokalisierung der Basisstation beeinträchtigen. Vom Roboter verwendete Sensoren zur Navigation können in einer unbekannten Umgebung wie dem Robotereinsatzgebiet nicht zuverlässig auf ihre Funktionsweise getestet werden. Das Anfahren an die Basisstation (Andockmanöver) kann manchmal auf Grund von Odometriefehlern zu einem fehlerhaften Ladekontakt führen. Durch den Nutzer können beispielsweise Hindernisse in der Nähe der Basisstation platziert werden, die ein Andockmanöver Stören und so das Andocken fehlschlagen lassen.

Angesichts der oben erläuterten Defizite herkömmlicher Roboter-Basisstation-Systeme und Verfahren zum Identifizieren und Lokalisieren einer Basisstation sowie zum sicheren Andocken des Roboters an eine Basisstation Besteht Bedarf für Verbesserungen. Beispielsweise wäre es wünschenswert, die Lokalisierung der Basisstation des Roboters mit Hilfe eines im oder am Roboter ohnehin vorhanden Navigationssensors zu ermöglichen, ohne dass die Basisstation ein Signal aussenden muss oder spezielle Markierungen an ihr befestigt werden müssen. Gemäß einigen der hier beschriebenen Ausführungsbeispiele wird dazu die Basisstation anhand ihrer geometrischen Gestalt (z.B. bestimmte geometrische Charakteristika (äußere Form/Gestalt) des Gehäuses der Basisstation) erkannt und lokalisiert. Das heißt, die Basisstation selbst weist aufgrund ihrer äußeren Form/Gestalt mindestens ein geometrisches Feature auf, anhand dessen der Roboter die Basisstation erkennen kann. Spezielle Markierungen auf dem Gehäuse der Basisstation (die jedoch keinen Einfluss auf deren geometrische Form/Gestalt haben) oder das Aussenden eines (Peil-) Signals ist nicht mehr nötig. Ganz allgemein soll ein Roboter nach Abschluss einer (z.B. Reinigungs-) Aufgabe schnell und zuverlässig zu seiner Basisstation zurückfinden. Gemäß einigen der hier beschriebenen Ausführungsbeispiele wird dazu die Position der Basisstation in einer Karte markiert und mittels verschiedener Methoden aktuell gehalten. Eine weitere wünschenswerte Fähigkeit eines mobilen Roboters ist, dass er sich in verschiedenen Robotereinsatzgebieten (wie beispielsweise verschiedene Etagen eines Hauses) gut zurechtfindet (sich gut und rasch orientieren kann). Gemäß einigen der hier beschriebenen Ausführungsbeispiele wird dazu in jedem Robotereinsatzgebiet eine Basisstation eingesetzt, die der Roboter voneinander unterscheiden kann. Der Roboter verknüpft eine Karte des jeweiligen Einsatzgebiets mit jeder Basisstation. Identifiziert der Roboter eine konkrete Basisstation kann er sofort in der korrekten, mit der jeweiligen Basisstation verknüpften Karte eine (Selbst-) Lokalisierung beginnen.

Eine weitere wünschenswerte Fähigkeit eines mobilen Roboters ist ein robustes und genaueres Andocken an die Basisstation, so dass z.B. zuverlässig ein Kontakt zwischen den Ladekontakten des Roboters und der Basisstation hergestellt werden kann. Gemäß einigen der hier beschriebenen Ausführungsbeispiele wird dazu nach Erreichen einer vorab berechneten Andockposition die Position und Orientierung des Roboters leicht korrigiert, um sicher andocken zu können. Ein Andocken soll auch im Falle möglicher Störungen (die Zufahrt zur Basisstation ist z.B. blockiert) möglich sein. Gemäß einigen der hier beschriebenen Ausführungsbeispiele wird dazu eine mögliche Störung detektiert und der Nutzer hierüber informiert.

Ganz allgemein wäre es wünschenswert, wenn ein Navigationssensor des Roboters innerhalb des Einsatzgebiets auf seine Funktionstüchtigkeit geprüft und gegebenenfalls neu kalibriert werden kann. Gemäß einigen der hier beschriebenen Ausführungsbeispiele wird dazu eine Basisstation mit ihren a-priori bekannten geometrischen Parametern genutzt.

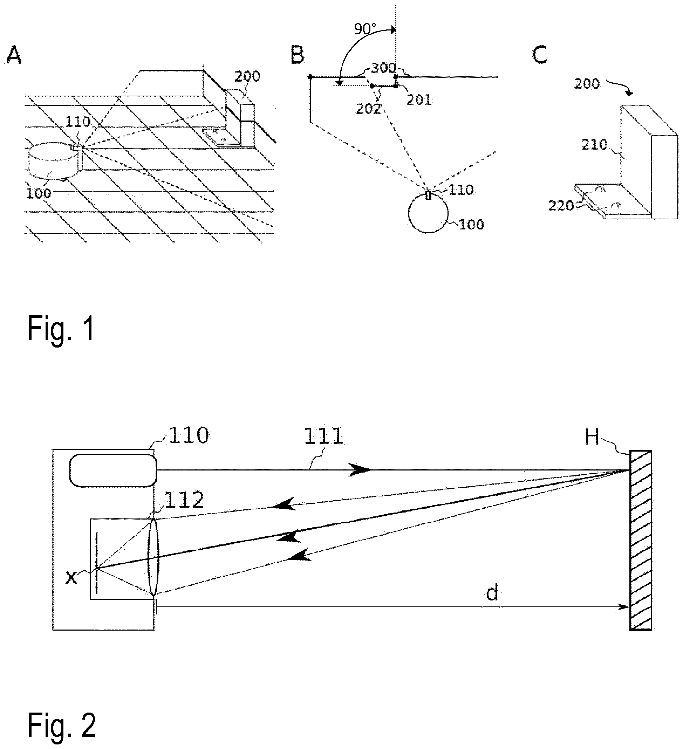

Figur 1A zeigt einen autonomen mobilen Roboter 100 und eine zugehörige Basisstation 200 in einem Robotereinsatzgebiet. Der Roboter besitzt ein Navigationsmodul mit mindestens einem Navigationssensor 110, um sich in seiner Umgebung zu orientieren und durch das Robotereinsatzgebiet zu navigieren, um so autonom eine Aufgabe zu verrichten. Das Navigationsmodul des Roboters 100 sammelt mit Hilfe des Navigationssensors 110 Informationen über die Position von "Navigationsfeatures" in der Umgebung des Roboters, z.B. geometrische Merkmale von Objekten wie z.B. von Hindernissen, Informationen über den Bodenbelag, etc. Geometrische Merkmale sind beispielsweise Flächen (z.B. eine Wand), Linien (z.B. Konturen einer Wand, von Möbeln, oder anderen Objekten in der Umgebung des Roboters 100) und Punkte (z.B. an Ecken oder Kanten von Objekten in der Umgebung des Roboters100. Jedem Navigationsfeature kann eine Position (inklusive Orientierung) im Raum zugeordnet werden und bei Bedarf in der elektronischen Karte des Roboters 100 gespeichert werden. Das Navigationsmodul arbeitet beispielsweise mit einer Hindernisvermeidungsstrategie und/oder einem SLAM-Algorithmus (*Simultaneous Localization And Mapping*) und/oder mit einer oder mehreren Karten des Robotereinsatzgebiets. Die Karten des Robotereinsatzgebiets kann der Roboter während eines Einsatzes neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt sein, oder von einem anderen Roboter und/oder Menschen zur Verfügung gestellt werden.

Der Navigationssensor 110 erfasst Informationen über die Umgebung des Roboters (und folglich auch über sein Einsatzgebiet), insbesondere über deren geometrische Eigenschaften, in ein, zwei, oder drei Dimensionen. Der Navigationssensor 110 kann beispielsweise ein Sensor zur Abstandsmessung sein wie beispielsweise ein optischer und/oder akustischer Sensor, der mittels Triangulation oder Laufzeitmessung eines ausgesandten Signals (z.B. Laserstrahl, Ultraschallsignal) die Distanz zwischen dem Sensor und einem Hindernis ermittelt. Als Navigationssensoren können folglich z.B. Triangulationssensoren, *Time-Of-Flight-Kameras,* Laserscanner, Ultraschallsensoren, etc. verwendet werden. Mit diesem Navigationssensor 110 kann das Navigationsmodul des Roboters 100 den Abstand zwischen Roboter und einzelnen Punkten, Linien und/oder Flächen von Objekten in der Umgebung des Roboters bestimmen. Die so ermittelten Punkte, Linien und/oder Flächen werden als "Navigationsfeature" bezeichnet und in einer Karte des Roboters gespeichert (d.h. die Geometrie des Navigationsfeatures und dessen Position inkl. Orientierung ist in der elektronischen Karte verzeichnet). Der Roboter kann sich später anhand dieser Navigationsfeatures orientieren und/oder die so erkannten Hindernisse kollisionsfrei umfahren. Ein anderes typisches Beispiel für einen Navigationssensor 110 ist eine Kamera (z.B. z.B. mit CCD- oder CMOS-Bildsensor) mit einem Detektionsmodul zur Identifizierung von Ecken und Kanten von Objekten (Navigationsfeatures) der Umgebung in einem Bild mittels Bilddatenverarbeitung. Auf diese Weise kann die Position eines Navigationsfeatures innerhalb einer projektiven Ebene relativ zum Roboter bestimmt werden. Wenn sich der Roboter bewegt, kann hieraus die Position inklusive Orientierung der Navigationsfeatures und des Roboters im Raum bestimmt werden. Diese Vorgehensweise wird als Visual-SLAM bezeichnet.

Figur 1C zeigt ein einfaches Beispiel einer Basisstation 200. Sie besteht aus einem Hauptkörper 210 mit geometrischen Charakteristika, die der Navigationssensor als Navigationsfeatures detektieren kann. Der Hauptkörper 210 der Basisstation 200 kann verschiedene weitere Komponenten wie beispielsweise zum Laden der Batterien des Roboters 100 oder zum Absaugen von Schmutz beherbergen. An der Basisstation 200 befinden sich beispielsweise zwei Ladekontakte 220. Am Roboter 100 befinden sich hierzu korrespondierende Kontakte, die die Ladekontakte 220 berühren müssen, um ein erfolgreiches Laden der Roboterbatterie zu ermöglichen. Das heißt, der Roboter muss zum Laden seiner Batterie in einer bestimmten Position und Orientierung an die Basisstation andocken. Die dafür nötige Position und Orientierung des Roboters (und somit den zu fahrende Pfad) kann der Roboter bestimmen, wenn ihm die Position und Orientierung des Hauptkörpers 200 bekannt ist.

Gemäß den hier beschriebenen Ausführungsbeispielen werden mittels des Navigationssensors 110 eines mobilen Roboters 100 automatisch die geometrischen Charakteristika (d.h. die äußere Form/Gestalt oder einzelne Teile davon) der Basisstation 200 als Navigationsfeatures für die Navigation erfasst. Durch Bestimmen und Interpretation der Eigenschaften der Navigationsfeatures (durch das Navigationsmodul des Roboters) können die Navigationsfeatures der Basisstation und somit die Basisstation eindeutig und ohne großen zusätzlichen Aufwand identifiziert, ihre Position und Orientierung in der Roboterumgebung bestimmt und in die Karte des Roboters eingezeichnet werden. Hierzu werden einfache Kriterien genutzt wie beispielsweise (1.) der Abstand von bestimmten Punkten (z.B. Ecken) eines Features zu anderen Features, (2.) die Länge von Kanten/Segmenten/Linien, (3.) die Größe von Flächen, (4.) die Lage von Features relativ zueinander, insbesondere der Winkel zwischen zwei Kanten, Segmenten oder Linien oder der Winkel, der durch drei spezifischen Punkten (Ecken) definiert wird, (5.) Verhältnisse (relative Größen, Längen), z.B. das Verhältnis der Länge zweier Linien, und (6.) Fehlermaße, wie die (quadratische) Abweichung der (fehlerbehafteten) Messung von den konstruktionsbedingten Sollwerten (durch eine Menge Punkte kann z.B. eine gerade Linie bestimmt sein, die mittels linearer Regression ermittelt werden kann; die Abweichung eines konkreten Punktes von der Regressionsgeraden kann ein Kriterium sein, ob der Punkt überhaupt zu der vermeintlichen Line gehört).

Beispielsweise kennzeichnet zumindest ein Teil der erfassten Features eine Breite, eine Tiefe und/oder Höhe eines Teils des Hauptkörpers der Basisstation. Die verwendeten Kriterien zur Lokalisierung der Basisstation sollten einfach zu berechnen sind und sich robust aus verschiedenen Positionen bestimmen lassen. Dies wird im Folgenden beispielhaft näher erläutert.

In dem in Fig. 1A gezeigten Beispiel wird vom Navigationssensor 110 der Abstand zu Hindernissen in Umgebung des Roboters z.B. mittels optischer Triangulation bestimmt, wofür strukturiertes Licht (im sichtbaren oder nicht-sichtbaren Bereich) in Form einer Linie annähernd parallel zur Bodenfläche ausgesandt wird. Das Prinzip der optischen Triangulation ist in Fig. 2 dargestellt. Das ausgesandte strukturierte Licht 111 trifft auf ein Hindernis H und wird dort diffus gestreut. Mit einer Kamera wird ein Bild der Umgebung aufgenommen, auf dem das von dem Hindernis zurückgestreute Licht (z.B. eine Lichtlinie) abgebildet ist. Aus der (im Fall einer horizontalen Lichtlinie) vertikalen Position x des strukturierten, zurückgestreuten Lichtes (z.B. der Lichtlinie) in dem Bild kann mittels Triangulation der Abstand d zu den angestrahlten Hindernissen H in ausgewählten Punkten oder entlang der gesamten Linie bestimmt werden.

Für eine gute Detektion ist die Basisstation 200 geometrisch so gestaltet, dass sie aufgrund ihrer Höhe von dem vom Navigationssensor 110 abgestrahlten Licht angestrahlt wird und sich aufgrund ihrer Tiefe deutlich von einer Wand absetzt. Zudem ist die Oberfläche der Basisstation so gestaltet, dass das vom Navigationssensor 110 abgestrahlte Licht gut diffus gestreut wird (also insbesondere keine absorbierenden oder spiegelnden Oberflächen aufweist).

Figur 1B zeigt beispielhaft ein mögliches Resultat einer Sensormessung des Szenarios aus Fig. 1A. Insbesondere erkennt der Roboter 100 mit Hilfe seines Navigationsmoduls und seines Navigationssensors 110 zwei linienförmige Navigationsfeatures 201 und 202, welche von der Vermessung der Basisstation herrühren. Die Navigationsfeatures 201, 202 werden in der Folge auch als Begrenzungslinien oder kurz als Linien bezeichnet. Diese zwei Linien 201 und 202 haben jeweils eine charakteristische Länge, die der Breite (in horizontaler Richtung) der Seitenfläche (Linie 201) und der Frontfläche (Linie 202) entspricht. Des Weiteren schließen die beiden Linien 201 und 202 einen bekannten Winkel (z.B. einen rechten Winkel) ein. Wenn also beispielsweise die Basisstation 200 (z.B. in einer horizontalen Ebene, die in einer bestimmten Höhe über dem Boden liegt) eine rechteckige Querschnittsfläche mit Seitenlängen von z.B. 5 cm und 15 cm hat, und der Roboter 100 mit Hilfe seines Navigationssensors 110 zwei annähernd rechtwinklige Linien mit einer Länge von jeweils annähernd 5 cm (Linie 201) und 15 cm (Linie 202) ermittelt, so kann er diese Linien 201, 202 als Basisstation interpretieren. Darüber hinaus kann auch das Seitenverhältnis von 5:15=1:3 genutzt werden. Wie in Fig. 1B dargestellt, kann der Roboter eine Seite der Basisstation aufgrund der Abschattung durch die Frontfläche des Navigationssensors nicht erkennen. Um diese weitere geometrische Eigenschaft der Basisstation zu erfassen, kann der Roboter um die Basisstation herumfahren, bis er auch die zweite Seitenfläche zuverlässig erkennt. Die Basisstation wird in diesem Fall also aus zumindest zwei verschiedenen Positionen aus betrachtet.

Bei dem zuvor beschriebenen Verfahren wird die Basisstation 200 nur anhand ihrer Rechteckform erkannt. Hierbei ergibt sich eine hohe Wahrscheinlichkeit einer Falschdetektion, da jedes quaderförmige Objekt (beispielsweise eine Schachtel) mit den passenden Seitenlängen als Basisstation erkannt werden würde. Zudem sind in der Regel die beschriebenen Ecken sowohl aus Sicherheitsgründen (Verletzungsgefahr) als auch aus Designgründen durch abgerundete Kanten ersetzt. Diese abgerundeten Ecken sind prinzipiell auch von dem zuvor beschriebenen Navigationssensor detektierbar. Jedoch ist der Rechenaufwand bei der Verarbeitung runder Formen höher als bei geraden Linien.

Deshalb wird gemäß dem her beschriebenen Ausführungsbeispiel, auch das Innere der Basisstation für ihre Detektion zu nutzen. Hierfür werden ein oder mehr Öffnungen in den Hauptkörper der Basisstation eingebracht. Durch diese Öffnungen können einzelne Komponenten (wie beispielsweise zum Absaugen von Schmutz) der Basisstation sichtbar sein. Dies kann aber auch vermieden werden, so dass nur eine oder mehr Innenwände zu erkennen sind.

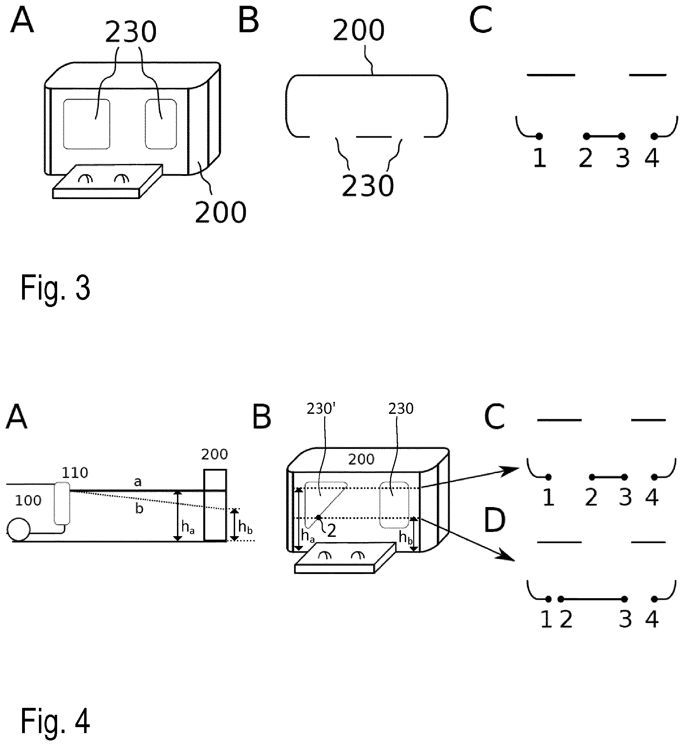

Figur 3A zeigt ein Beispiel einer Basisstation 200 mit abgerundeten Kanten und zwei Öffnungen 230, die in der Vorderseite der Basisstation angeordnet sind. Figur 3B zeigt eine Querschnittsansicht durch die Basisstation 200 von Fig. 3A. wobei die Schnittebene eine horizontale Ebene ist, die in einer bestimmten Höhe über dem Boden liegt. Die bestimmte Höhe ist jene Höhe über dem Boden in der der Navigationssensor 110 die Abstandsmessung zu Hindernissen in der Umgebung des Roboters durchführt. Figur 3C zeigt ein Beispiel für das Ergebnis einer solchen Messung, wenn der Roboter mit einigem Abstand (beispielsweise 0,5 - 1 m) vor der Basisstation steht. Hierbei sieht er Teile der Rückwand der Basisstation 200, die alle entlang einer Linie liegen. Zusätzlich kann der Roboter die Position von vier Punkten (1, 2, 3, 4) mit geringen Messfehlern bestimmen. Die Position und Größe der beiden Öffnungen 230 (Fenster) ist hierbei beispielsweise so gewählt, dass der Abstand von je zwei Punkte für beliebige Punktepaare verschieden ist (also insbesondere d(1; 2) ≠ d(1; 3) ≠ d(1; 4) ≠ d(2; 3) ≠ d(2; 4) ≠ d(3; 4), wobei d(i, j) den Abstand zwischen Punkt i und Punkt j bezeichnet). Diese Abstände lassen sich leicht berechnen und mit gespeicherten Sollwerten vergleichen. Zusätzlich kann beispielsweise der Abstand der Punkte zu der durch die Rückwand gebildeten Linie verglichen werden. Auch das Verhältnis der Abstände kann berücksichtigt werden. Mit einer Fehlerfunktion, wie beispielsweise das Bestimmtheitsmaß (*Coefficient of Determination*) eines Regressionsmodells, kann geprüft werden, wie exakt die Punkte 1, 2, 3 und 4 auf einer Linie liegen, die parallel zur Rückwand ist. Hierdurch gibt es zahlreiche Merkmale, die die Wahrscheinlichkeit einer Fehldetektion erheblich reduzieren, so dass sie im Alltag praktisch nicht auftritt.

Um das Innere vor Verschmutzung zu schützen, kann vor den Öffnungen 230 eine Abdeckung 250 angebracht werden, die aus einem für das durch den Navigationssensor 110 ausgesandte Licht transparentem Material besteht. Das ausgesandte Licht kann z.B. im für den Menschen nicht sichtbaren (Infrarot-) Bereich liegen, so dass die Abdeckung 250 aus Sicht des Roboters transparent ist, jedoch aus Sicht eines Menschen farbig und undurchsichtig scheint. Solch eine Abdeckung 250 muss nicht nur die Öffnungen 230 abdecken, sondern kann unabhängig hiervon genutzt werden, um die durch den Nutzer und den Roboter erkennbare geometrische Form unterschiedlich zu gestalten. Hierdurch lassen sich Designaspekte mit einer einfachen Detektierbarkeit verbinden. Die Abdeckung 250 kann mit einer Antireflexbeschichtung versehen sein, die auf die Wellenlänge des vom Navigationssensors 110 ausgesandten Lichts abgestimmt ist.

Bei der beschriebenen Messung in einer (horizontalen) Ebene kann diese in ihrem Abstand zum Boden leicht variieren (z.B. durch unterschiedliche Einbauhöhen des Navigationssensors 110 oder dadurch, dass die Messebene nicht vollständig parallel zum Boden ist, z.B. weil der Roboter leicht schief steht). Damit die Basisstation zuverlässig an ihrer geometrischen Form in dieser Ebene erkannt werden kann, muss zumindest eine Auswahl der erkennbaren Navigationsfeatures (bzw. der hierauf beruhenden Maße) in der Umgebung der zu erwartenden Querschnittmessung unabhängig von der tatsächlichen Messhöhe (Abstand der Ebene, in der die Abstandsmessung erfolgt, vom Boden) sein.

In einigen Anwendungen wird der Roboter in voneinander isolierten Robotereinsatzgebieten wie beispielsweise zwei unterschiedlichen Etagen eines Hauses eingesetzt. In jedem der Einsatzgebiete befindet sich eine Basisstation 200, die der Roboter 100 mittels seines Navigationssensors 110 eindeutig erkennen kann. Wenn der Roboter 100 nun die Basisstationen 200 unterscheiden kann, so gewinnt der Roboter automatisch auch Informationen darüber, in welchen der verschiedenen Einsatzgebiete er sich befindet, ohne dass der Nutzer zusätzlich eingreifen muss.

Um die Unterscheidbarkeit der Basisstationen 200 zu erreichen, sind beispielsweise Teile der geometrischen Form der Basisstation durch den Nutzer veränderbar (z.B. bei der Inbetriebnahme der Basisstation), so dass ein durch den Navigationssensor 110 erkennbares Feature in vordefinierter Weise veränderbar ist. Diese Veränderung kann beispielsweise durch Verschieben, Herausbrechen oder Hinzufügen von Teilen der Basisstation erfolgen. Am Beispiel der Basisstation 200 aus Fig. 3A kann eine Veränderung beispielsweise durch Änderung der Größe (Breite) eines der beiden Öffnungen geschehen. So kann beispielsweise die Lage des Punktes 3 (Fig. 3C) variiert werden, indem beispielsweise eine zusätzliche Blende hinzugefügt wird. Beispielsweise kann hinter dem Steg zwischen den beiden Sichtfenstern eine verschiebbare Blende sitzen.

Autonome mobile Roboter 100, die ihre Basisstation 200 in einer Karte markieren, sind an sich bekannt. Häufig dient hierbei die Basisstation als Ausgangspunkt der Karte, d.h. die Basisstation hat eine feste Position in der Karte. Jedoch kann sich die Position der Basisstation ändern. Die Detektion der Basisstation anhand von durch den Navigationssensor 110 erfassbaren Eigenschaften (Navigationsfeatures), welche standardmäßig für die Navigation genutzt werden, ermöglicht eine einfache Aktualisierung der Position der Basisstation in der Karte. Jedoch ist auch eine Detektion der Basisstation auf andere Weise möglich, um basierend darauf die Position der Basisstation in der Karte des Roboters zu aktualisieren. Die Änderung der Position der Basisstation kann durch einen Nutzer erfolgen z.B. (1.) während der Roboter im Einsatz ist oder (2.) während der Roboter an der Basisstation angedockt ist. Darüber hinaus kann der Kartenaufbau durch den Roboter und/oder seine Lokalisierung in der Karte (*SLAM*) aufgrund von Mess- und Odometriefehlern dazu führen, das die vom Roboter erwartete Position der Basisstation mit der tatsächlichen Position nicht übereinstimmt. Hierdurch kann im schlimmsten Falle jegliche (sinnvolle) Information über die Position der Basisstation verloren gehen. Im Folgenden wird anhand von Beispielen erklärt, wie diese Probleme gelöst oder zumindest gemildert werden können.

*Positionsupdate mittels SLAM-Algorithmus* - Häufig werden für die Navigation von autonomen mobilen Robotern SLAM-Algorithmen (*Simultaneous Localization And Mapping,* gleichzeitige Lokalisierung und Kartenerstellung) eingesetzt, mit denen die Position des Roboters und von ausgewählten Navigationsfeatures, die vom Navigationssensor erfasst wurden, laufend in Beziehung gesetzt werden. Hierdurch wird ein robuster Kartenaufbau durch den Roboter trotz Mess- und Odometriefehlern ermöglicht. SLAM ist verhältnismäßig rechenaufwändig, weshalb nur einige ausgewählte und gut sichtbare Navigationsfeatures, wie z.B. Wände, berücksichtigt werden, um die benötigte Rechenleitung in Grenzen zu halten. Die Position der im SLAM-Algorithmus mitgeführten Navigationsfeatures (und des Roboters) wird ständig korrigiert; sie besitzen also keine feste (Relativ-) Position gegenüber anderen Dingen die nicht im SLAM mitgeführt werden. Die Features der Basisstation sind in der Regel zu klein, für eine Berücksichtigung durch den SLAM-Algorithmus, und somit kann sich ihre gespeicherte Position gegenüber einer Wand (die vom SLAM-Algorithmus mitgeführt wird) verschieben. Das kann dazu führen, dass die gespeicherte Position in einem falschen Zimmer oder sogar außerhalb des Einsatzgebiets liegt. Aus diesem Grund ist es nützlich, die Position der Basis zu aktualisieren.

Da die Basisstation ebenfalls detektierbare geometrische Merkmale (Navigationsfeatures)enthält, kann die Position der Basisstation auf einfache Weise mit dem SLAM-Algorithmus aktuell gehalten werden. Hierfür wird beispielsweise mindestens ein gut detektierbares Feature der Basisstation (vgl. Fig. 3) ausgewählt und mit Hilfe des SLAM-Algorithmus verfolgt. Dies könnte beispielsweise das in Fig. 3C durch die Punkte 2 und 3 gebildete Segment sein. Alternativ kann auch ein Feature genutzt werden, welches in der Nähe der Basisstation detektiert wurde. Dies kann beispielsweise die Linie 300 in Fig. 1B sein, welche von der Wand erzeugt wird, an der die Basisstation steht. In beiden Fällen speichert der Roboter, welches der mittels SLAM-Algorithmus verfolgten Features die Position der Basisstation bestimmt. Zusätzlich kann der Roboter die Position der Basisstation relativ zu diesem Navigationsfeature speichern. Wenn der Roboter zu der Basis zurückkehren will, so kann er eine Position in der Nähe des Features anfahren, wodurch ein zuverlässiges Wiederfinden gewährleistet wird.

*Positionsupdate während eines Robotereinsatzes* - Im Falle, dass die Basisstation beispielsweise durch den Nutzer während eines Robotereinsatzes verschoben wurde, ist es vorteilhaft, wenn der Roboter 100 die Basisstation 200 beim Vorbeifahren erkennt und die neue Position in der Karte aktualisiert. Da vom Navigationssensor zur Navigation des Roboters Features der Basisstation erfasst werden, reicht es hierbei, neu erkannte Features daraufhin zu testen, ob sie Teil der Basisstation sein könnten. Hierbei kann in einem ersten Schritt gezielt eine einfach zu erkennende Eigenschaft genutzt werden, deren Erkennung nur geringe zusätzliche Rechenzeit benötigt. Wenn diese bestätigt wird, können weitere Eigenschaften der Basisstation geprüft werden.

Beispielsweise kann bei der Basisstation aus Fig. 3A nach Segmenten (z.B. Linien bestimmter Länge und Orientierung) gesucht werden, deren Länge dem Abstand der Punkte 2 und 3 aus Abbildung 3C entspricht. Wenn solch ein Segment gefunden wurde, kann weiter geprüft werden, ob eine Rückwand zu erkennen ist, ob diese den richtigen Abstand hat, und ob die Punkte 1 und 4 vorhanden sind und auf einer Linie liegen. Hierbei kann beispielsweise die Länge erkannter Segmente standardmäßig vom Navigationsmodul erfasst werden, um ihre Relevanz für die Navigation zu bewerten.

Wenn die Basisstation an einer neuen Position erkannt wird, so gibt es verschieden Handlungsoptionen für den Roboter. Wenn die neu Position nur leicht von der alten abweicht (beispielsweise um einen Abstand von weniger als 1 m), so wird die aktuelle Position der Basisstation gespeichert und die Alte gelöscht. Dies ist insbesondere dann sinnvoll, wenn der Navigationssensor gleichzeitig die alte Position der Basisstation untersucht und an dieser Stelle keine Basisstation erkannt wird. Wenn eine Basisstation an einer Stelle im Robotereinsatzgebiet detektiert wird, die weit von der vorhergehenden Basisstation entfernt ist, so kann es sich um eine zweite Basisstation handeln. In diesem Fall wird die Position der Basisstation neu gespeichert und die alte Position vorgemerkt, um später verifiziert zu werden. Wenn der Roboter in der Nähe der alten Position ist, prüft er, ob die Basisstation noch vorhanden ist. Abhängig von dem Ergebnis wird die alte Position gelöscht, oder es wird gespeichert, dass sich zwei Basisstationen im Robotereinsatzgebiet befinden. Für beide Basisstationen kann die zugehörige Position (samt Orientierung) in der Karte gespeichert werden.

Es kann auch vorkommen, dass der Roboter laut Karteninformation sich in der Nähe einer Basisstation befindet, diese aber nicht detektiert wird. Dies kann der Fall sein, wenn die Position der Basisstation vom Nutzer verändert wurde, aber auch, wenn sie vom Nutzer nur für einen Moment entfernt wird, beispielsweise um sie zu reinigen. Im einfachsten Fall löscht der Roboter die Position der Basisstation aus den Kartendaten. Alternativ wird die Position in der Karte des Roboters als "zweifelhaft" markiert. Falls der Roboter später bei seinem Einsatz eine Basisstation an einer anderen Stelle erkennt, so wird die als zweifelhaft markierte Position gelöscht und die neue Position der Basisstation gespeichert. Anderenfalls kehrt der Roboter zu der als zweifelhaft markierten Position zurück, wenn er die Basisstation anfahren will. Wenn dort erneut keine Basisstation gefunden wird, wird ein spezielles Suchprogramm zum Auffinden der Basis gestartet, wobei der Roboter im Einsatzgebiet herumfährt und gezielt nach Merkmalen (Navigationsfeatures) der Basisstation sucht. Zusätzlich kann auch eine Nachricht an den Nutzer (z.B. mittels einer Benutzerschnittstelle, z.B. einer Applikation auf einem Tablet-Computer oder einem Mobiltelefon) gesandt werden, so dass dieser bei Bedarf auf die Situation reagieren kann.

Die Messgenauigkeit des Navigationssensors 110 kann sich mit steigendem Abstand zu einem Objekt, zu dem die Entfernung gemessen werden soll, verschlechtern. Bei ausgedehnten Objekten hängt sie zusätzlich auch von deren Orientierung ab. Dies kann insbesondere bei Triangulationssensoren der Fall sein. Wird beispielsweise die Basisstation 200 aus Fig. 3 direkt von vorne gesehen, kann der Abstand der Punkte 2 und 3 in circa 2m Entfernung mit hinreichender Genauigkeit bestimmt werden. Wird jedoch die Basisstation unter einem Winkel von 45° gesehen, so darf für eine zuverlässige Messung die Entfernung zwischen Basisstation 200 und Roboter 100 rund 1m nicht überschreiten. Hiervon ausgehend kann ein maximaler Abstand für die Prüfung auf potenzielle Zugehörigkeit eines erkannten Navigationsfeatures zur Basisstation festgelegt werden, um die Qualität der Detektion der Basisstation zu verbessern. Der maximale Abstand für die Durchführung einer Prüfung kann zusätzlich von der Orientierung des Features (relativ zum Roboter) abhängen.

*Positionsupdate bei Start eines Robotereinsatz* - Ein Nutzer kann den Roboter samt Basisstation versetzen, während der Roboter an dieser (angedockt) steht und beispielsweise in einem Pausenmodus ist. Wenn der Roboter eine vorhandene Karte nutzt, die er beispielsweise bei einem vorhergehenden Einsatz aufgebaut hat, so wird seine neue Position (und die der Basisstation) nicht mit den vorhanden Navigationsinformationen übereinstimmen. Gemäß dem hier beschriebenen Ausführungsbeispiel kann der Roboter bei Beginn eines Arbeitseinsatz die folgenden Schritte ausführen: (1.) Herunterfahren von der Basisstation und Laden der für den Arbeitseinsatz relevanten Kartendaten; (2.) Lokalisierung des Roboters in den vorhandenen Kartendaten; und (3.) Aktualisierung der Position der Basisstation in den Kartendaten.

Die Selbstlokalisierung des Roboters kann hierbei mit einem Algorithmus erfolgen, der durch Vergleich der von dem Navigationssensor ermittelten Daten mit den vorhandenen Kartendaten eine Position des Roboters in der Karte ermittelt. Um den Lokalisierungsalgorithmus zu beschleunigen kann die bisherige, bekannte Position der Basisstation als eine erste Lokalisierungshypothese für den Standort des Roboters genutzt werden. Wenn beispielsweise in dem oben erwähnten Schritt 2 die Lokalisierung des Roboters fehlschlägt, so beginnt der Roboter mit einem erneuten Kartenaufbau, wobei die Position der Basisstation in der neuen Karte gespeichert wird. Am Ende des Arbeitseinsatz des Roboters, kann der Nutzer über die neu erstellte Karte informiert werden mit der Anfrage, ob diese die alte Karte ersetzen oder ergänzen soll.

*Navigation in mehreren Robotereinsatzgebieten* - Ein Roboter kann in zwei oder mehr voneinander isolierten Robotereinsatzgebieten wie beispielsweise den Etagen eines Hauses eingesetzt werden. In jedem der Einsatzgebiete kann eine Basis stehen, die der Roboter beispielsweise mittels seines Navigationssensors (wie weiter oben beschrieben) eindeutig identifizieren kann. Aufgrund der Identifikation der Basisstation "weiß" der Roboter folglich, in welchem Einsatzgebiet (z.B. Etage) er sich befindet. Somit kann das Navigationsmodul des Roboters jene Kartendaten laden, die mit der jeweiligen Basisstation verknüpft sind. Hierbei wird vorausgesetzt, dass der Nutzer den Roboter zuvor auf einer der Basisstationen oder in der Nähe einer der Basisstationen positioniert hat. In den geladenen Kartendaten kann der Roboter eine Lokalisierung starten. Hierbei kann er wie zuvor beschrieben die bekannte Position der Basisstation in der Karte und seine Relativposition zu dieser nutzen, um die Lokalisierung zu beschleunigen. Dies geschieht beispielsweise dadurch, dass die Position der Basisstation (oder Andockposition des Roboters) als Lokalisierungshypothese genutzt wird. In einer alternativen Form wird der Bereich in der Karte, in dem sich der Roboter zu lokalisieren versucht, auf einen Bereich um die Basisstation herum eingeschränkt. Dieser Bereich ist beispielsweise ein Quadrat vor der Basisstation (an diese angrenzend) oder ein Kreis um die Basisstation. Dessen Seitenlänge/Radius kann von dem Abstand zwischen Roboter und Basisstation abhängen.

Gemäß einem weiteren Ausführungsbeispiel führt der Roboter zur Lokalisierung folgende Schritte aus: (1.) Herunterfahren von der Basisstation; (2.) Detektieren und Identifizieren der Basisstation, (3.) Laden der mit dieser Basisstation verknüpften Kartendaten; (4.) Lokalisierung des Roboters in der Karte, basierend auf den geladenen Kartendaten; und (5.) Aktualisierung der Position der Basisstation in den Kartendaten. Der Schritt 1 ist optional, je nachdem, ob sich der Roboter am Anfang an der Basisstation angedockt ist oder nicht.

Wenn keine Kartendaten mit der erkannten Basisstation verknüpft sind oder die Lokalisierung in der jeweiligen Karte fehlschlägt, so wird eine neue Karte des Robotereinsatzgebiets erstellt. Am Ende des Arbeitseinsatzes des Roboters, kann der Nutzer über die neu erstellte Karte informiert werden. Der Roboter kann den Nutzer fragen, ob die neue Karte mit der Basisstation verknüpft und dauerhaft gespeichert werden soll. In einer alternativen Ausführung kann der Roboter bei einer fehlgeschlagenen Lokalisierung eine Lokalisierung in den mit anderen Basisstationen assoziierten Kartendaten versuchen. Letzteres macht z.B. Sinn, falls der Nutzer eine Basisstation durch eine andere ausgetauscht hat.

Navigationssensoren, wie beispielsweise Sensoren zur Abstandsmessung (siehe z.B. Triangulationssensor gemäß Fig. 2), sind sehr empfindliche Messsysteme. Eine Störung wie beispielsweise ein Stoß kann zu einer Dekalibrierung des Sensors und somit zu anhaltend fehlerhaften Messungen führen. Hierdurch kann die Navigation des Roboters durch sein Einsatzgebiet erheblich beeinträchtigt werden. Für das zuverlässige Funktionieren des Roboters kann es notwendig sein, systematische Messfehler des Navigationssensors zu erkennen und möglichst durch eine Kalibrierung zu kompensieren. Eine Basisstation gemäß den hier beschriebenen Ausführungsbeispielen kann für diesen Zweck (Kalibrierung) verwendet werden, da sie gut definierte durch den Navigationssensor erkennbare geometrische Eigenschaften hat.

Eine Dekalibrierung des Navigationssensor kann beispielsweise durch Messen der Position, des Abstands, der Länge, der Größe und/oder von Winkeln von einer oder mehreren geometrischen Eigenschaften (bzw. daraus ermittelte Navigationsfeatures) der Basisstation und dem Vergleich mit einem entsprechenden Sollwert festgestellt werden. Dieser Sollwert kann auch genutzt werden, um den Navigationssensor neu zu kalibrieren. Darüber hinaus können einzelne geometrische Eigenschaften der Basisstation so gestaltet werden, dass durch deren Messung ein direkter Rückschluss auf zumindest einen zu kalibrierenden Parameter des Navigationssensors ermöglicht wird.

Um die Genauigkeit der Kalibrierung zu verbessern, können mehrere unabhängige Messungen kombiniert werden, wodurch sich der Messfehler einer Einzelmessung weniger stark auswirkt. Hierzu können mehrere unabhängige geometrische Eigenschaften der Basisstation (wie beispielsweise Breite und Tiefe, vgl. Fig. 1B und Fig. 3) vermessen werden. Alternativ oder zusätzlich kann die gleichen Messung aus verschieden Entfernungen zur Basisstation durchgeführt werden. Insbesondere kann auch der gefahrene Abstand (Odometrie) zwischen zwei Messpositionen des Roboters berücksichtigt werden.

Ein Beispiel für einen Navigationssensor (insbesondere Sensor zur Abstandsmessung) ist ein Triangulationssensor, welcher strukturiertes Licht (siehe Fig. 2, Lichtstrahl 111) aus einer Lichtquelle aussendet und mit einer Kamera (siehe Fig. 2, Kamera 112) ein Bild der so beleuchteten Umgebung aufnimmt. Aus dem Kamerabild und der Relativposition zwischen Kamera und Lichtquelle lässt sich der Abstand (siehe Fig. 2, Abstand d) zu einem Hindernis bestimmen. Kleine Änderungen der Relativposition durch Verschiebung (z.B. um rund 1 µm) oder durch Verdrehung (z.B. um rund 0,01°) der Lichtquelle (und damit des Lichtstrahls 111) relativ zur Kamera 112 (beispielsweise durch Stöße) können zu systematischen Messfehlern in der Abstandmessung führen; der (zuvor kalibrierte) Navigationssensor 110 dekalibriert. In Fig. 1A ist ein Beispiel dargestellt, in dem mit Hilfe eines Triangulationssensors (Navigationssensor 110) der (horizontale) Querschnitt der Basisstation 200 erfasst wird. Ein mögliches Ergebnis dieser Messung ist in Fig. 3C zu sehen. Aus diesen Sensordaten können verschiedene Maße (Maßzahlen) abgeleitet werden, die einen Rückschluss auf die Qualität der Abstandsmessung erlauben. Beispielsweise kann (a) der Abstand der Punkte 1 und 4 bestimmt werden, und mit der (bekannten) tatsächlichen Breite verglichen werden, (b) der Abstand eines oder mehrerer Features an der Vorderseite der Basisstation (wie der Punkte 1, 2, 3 und 4) zur Rückwand bestimmt werden und mit der (bekannten) tatsächlichen Tiefe der Basisstation verglichen werden, (c) geprüft werden, ob die Punkte 1, 2, 3 und 4 auf einer Linie liegen, und/oder (d) der Winkel zwischen der Rückwand und der durch die vorderen Features (Punkte 1, 2, 3 und 4) definierten Linie bestimmt werden (im vorliegenden Beispiel sollte dieser Winkel idealerweise null sein, d.h. die Linie ist parallel zur Rückwand). Insbesondere kann basierend auf beispielsweise der Breite und/oder Tiefe der Basisstation 200 auch Abstand zwischen Roboter 100 und Basisstation 200 bestimmt werden. Dieser Wert kann genutzt werden, um eine Abstandsmessung zu kalibrieren.

Eine besondere Herausforderung für die Genauigkeit einer Kalibrierung mit Hilfe der Basisstation 200 kann ihre vergleichsweise kleine Bauform sein (verglichen mit großen Möbeln). Während der Navigationssensor über mehrere Meter hinweg genaue Messergebnisse liefern soll, ist die Basisstation nur einige Zentimeter breit und tief. Mit dem Anbringen von Spiegeln innerhalb der Basisstation, kann der Lichtweg innerhalb dieser vergrößert werden. Hierdurch kann die Genauigkeit der Kalibrierung eines Navigationssensors, der gezielt Licht aussendet, verbessert werden. Beispielsweise kann in der Basisstation gemäß Fig. 3A das Innere der Rückwand verspiegelt werden. Für den Navigationssensor 110 würde in diesem Fall die innere Oberfläche der vorderseitigen Gehäusewand sichtbar werden, sodass die doppelte Tiefe als Messweg zur Verfügung steht als dies ohne Verspiegelung der Fall wäre.

Im Falle eines Triangulationssensors können folgende Sensorparameter kalibriert werden: Abstand des Bildsensors (z.B. CCD- oder CMOS-Sensor) von der Linse (Brennweite); der Abstand der optischen Achsen von Lichtquelle (z.B. Laser) und Linse); die Neigung der Messebene (entspricht der Neigung der optischen Achse der Lichtquelle, siehe Fig. 4a, Fall b); der Nullpunkt der Position x auf dem Bildsensor (siehe Fig. 2). Insbesondere die letzten beiden der genannten Parameter (Neigung der optischen Achse der Lichtquelle und Position des Nullpunkts am Bildsensor) können bei Dekalibrierung die Abstandsmessung vor allem bei größeren Entfernungen starkverfälschen, was zu systematischen Messfehlern führt. Beide Parameter des Triangulationssensors können kalibriert werden, beispielsweise durch Messung der Breite der Basisstation (oder des Abstandes der Punkte 1 und 4 in Fig. 3C) und Anpassung (Kalibrierung) der Parameter, so dass der Messwert mit einem bekannten Referenzwert übereinstimmt. Auch die Tiefe der Basisstation (z.B. Abstand des Punktes 3 von der Rückwand, siehe Fig. 3C) ist bekannt und kann für die Kalibrierung der genannten Parameter verwendet werden.

Während gemäß dem zuvor beschriebenen Beispiel nur die Form der Basisstation in einer horizontalen Schnittebene berücksichtigt wird, können alternativ oder zusätzlich auch von dem Bodenabstand der (horizontalen) Messebene abhängige Navigationsfeatures berücksichtigt werden.

Fig. 4A zeigt einen Roboter 100 mit einem Navigationssensor 110 (insbesondere einen Triangulationssensor), welche eine Messung des Querschnitts der Basisstation 200 durchführt. Die Messung erfolgt im Idealfall in einer Ebene, die parallel zum Boden in einem Bodenabstand h liegt (Fall a in Fig. 4A), kann aber davon abweichen (Fall b in Fig. 4A). Figur 4B zeigt eine Basisstation 200 vergleichbar zu dem Beispiel aus Fig. 3A jedoch mit einer Öffnung 230' (Fenster), die so geformt ist, dass die Position (und/oder die Ausdehnung) eines Navigationsfeatures von dem Bodenabstand (punktierte Linien in Fig. 4B) abhängt, in dem die Sensormessung durchgeführt wird. Fig. 4C repräsentiert als Navigationsfeatures die Eckpunkte der Öffnungen 230 und 230' der Basisstation für den Fall a (Bodenabstand der Messung h=hₐ), und Fig. 4D repräsentiert als Navigationsfeatures die Eckpunkte der Öffnungen 230 und 230' der Basisstation für den Fall b (Bodenabstand der Messung h=hb). Im Fall b ist der Punkt 2 im Vergleich zum Fall a nach links verschoben, was zur Folge hat, dass im Fall b der Abstand der Punkte 1 und 2 kleiner und der Abstand der Punkte 2 und 3 größer ist als im Fall a. Durch Vermessung der Basisstation aus verschiedenen Abständen, kann hierdurch beispielsweise direkt bestimmt werden, ob die Sensormessung parallel zur Bodenfläche erfolgt, beziehungsweise wie groß die Verkippung der Messebene relativ zu einer horizontalen Ebene ist. Bei diesem Vorgehen wird also zusätzlich zu der zweidimensionalen Querschnittsmessung die dritte Dimension der Basisstation genutzt um eine Sensorparameter (hier die Neigung der optischen Achse der Lichtquelle bzw. die Messebene des Navigationssensors) direkt zu bestimmen und zu kalibirieren. Die Basisstation benötigt dazu eine geometrische Eigenschaft (z.B. Lage des Punktes 2, oder Abstand der Punkte 1 und 2), welche eindeutig vom Bodenabstand h abhängt.

Gemäß einem weiteren Beispiel der Erfindung berechnet das Navigationsmodul des Roboters aus den detektierten geometrischen Eigenschaften (Navigationsfeatures) der Basisstation eine Andockposition und steuert den Roboter anschließend in diese Position. Wenn die Messungen des Navigationssensors fehlerhaft sind, so kann das Andockmanöver fehlschlagen, da die berechnete Andockposition nicht mit der tatsächlich notwendigen übereinstimmt. Die Berechnung der Andockposition hängt von einem oder mehreren Parametern ab, die kalibriert werden können, wenn die exakte Andockposition bekannt ist. Diese Parameter sind beispielsweise die Position des Navigationssensors 110 am Roboter 100, aber auch z.B. die Verschiebung eines Spiegels einer Empfangsoptik des Navigationssensors 100. Mittels eines auf Versuch und Irrtum basierenden Verfahrens kann eine Kalibrierung erfolgen. Hierfür wird die berechnete Andockposition (variiert, und mit dieser das Andockmanöver durchgeführt. Dies wird wiederholt und die Erfolgsrate gemessen. Die Andockposition mit der höchsten Erfolgsrate wird genutzt, um die notwendigen Parameter zu kalibrieren. Die Variation der Position (Orientierung) kann zufällig erfolgen, oder systematisch in kleinen Schritten in einem Intervall um die berechnetet Position. Statt der Position kann natürlich auch direkt der interessante Parameter variiert werden und daraus die interessanten Positionen bestimmt werden.

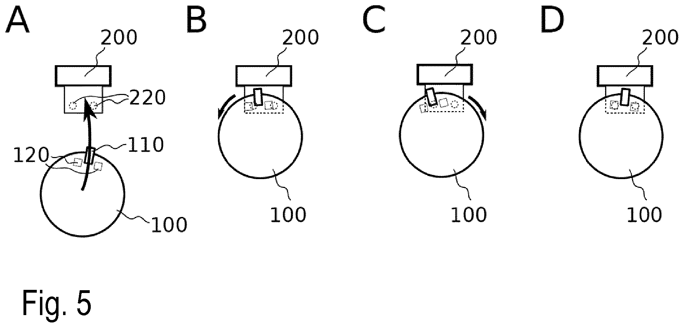

Wie weiter oben beschrieben, kann der Roboter 100 aus der Position der Basisstation 200 seine Andockposition und -orientierung bestimmen. Gemäß dem in Fig. 5A dargestellten Beispiel kann das Navigationsmodul aus seiner berechneten Andockposition und - orientierung einen Pfad für den Roboter bestimmen und den Roboter zu der Andockposition steuern. Jedoch kann die tatsächliche Endposition und Endorientierung des Roboters 100 (beim Andocken) von der geplanten und notwendigen Andockposition und -orientierung beispielsweise aufgrund von Odometriefehlern abweichen. Figur 5B zeigt, dass schon aufgrund kleiner Abweichungen Fehler entstehen können, z.B. dass kein Kontakt zwischen den Ladekontakten 220 der Basisstation und den korrespondierenden Ladekontakten 120 des Roboters zustande kommt, wodurch die autonome Funktionsfähigkeit des Roboters 100 beeinträchtigt wird.

Um nach einem Andockmanöver eine kleine Abweichung der Roboterposition und/oder -orientierung von der tatsächlich notwendigen Andockposition und/oder -orientierung zu korrigieren, variiert der Roboter 100 seine Position (z.B. Orientierung)geringfügig. Wie in Fig. 5C dargestellt, ist es beispielsweise möglich durch eine kleine Drehung trotz nicht exakter Andockposition einen Ladekontakt herzustellen (siehe Fig. 5D)

Ausgehend von der ersten Andockposition gemäß Fig. 5B führt der Roboter beispielsweise eine erste Drehung um einen vordefinierten Winkel α nach links aus. Wie in Fig. 5C dargestellt führt dies nicht notwendigerweise zu einem Erfolg, weshalb eine zweite Drehung in die entgegengesetzte Richtung erfolgt. Um einen symmetrischen Bereich um die ursprüngliche Orientierung abzudecken, erfolgt die zweite Drehung beispielsweise um bis zu etwa dem doppelten Winkel 2α wie bei der ersten Drehung jedoch in die entgegengesetzte Richtung.

Ob die erforderliche Andockorientierung erreicht wurde, kann beispielsweise durch eine vorhandene Spannung an den Ladekontakten oder durch einen Kontaktschalter festgestellt werden. Wenn beispielsweise keine erfolgreiche Kontaktierung erreicht wird, kann nach Beendigung der beschriebenen Drehungen der Roboter in die Ausgangsorientierung zurückkehren.

Um die Robustheit des Andockmanövers an die Basisstation weiter zu steigern, kann diese beispielsweise eine oder mehr (federnd gelagerten) Nasen besitzen, die in korrespondierende Aussparungen am Roboter greifen. In Fig. 1C sind dies beispielsweise die beiden Ladekontakte 220. Durch die Rotation des Roboters können diese Nasen in korrespondierende Aussparungen am Roboter gleiten und so eine genaue Andockposition und - orientierung definieren. Anschlüsse zum Absaugen eines Schmutzbehälters am Roboter durch die Basisstation oder zum Auffüllen eines Reinigungsmittels können eine vergleichbare Funktion erfüllen.

Um ein erfolgreiches Andockmanöver zu gewährleisten, sollte ein gewisser Andockbereich vor der Basisstation frei von Hindernissen sein. Dieser Bereich sollte so groß sein, dass der Roboter die Basisstation beim Vorbeifahren zuverlässig erkennt und genügend Platz für ein möglichst einfaches und direktes Andockmanöver ist. Dies ist beispielsweise ein Bereich von rund je einem Roboterdurchmesser rechts und links neben der Basisstation und ein Bereich von etwa zwei Roboterdurchmessern vor der Basisstation

Durch den Einfluss eines Nutzers kann es zu verschiedenen Störungen kommen wie beispielsweise (i) die Basisstation wurde so aufgestellt, das eine Wand durch den Andockbereich verläuft (insbesondere weil die Basisstation zu nah in einer Zimmerecke steht); (ii) im Andockbereich wurden kleine Hindernisse wie Stuhlbeine oder herumliegende Schuhe platziert, die einen Teil des Fahrwegs blockieren; (iii) im Andockbereich wurden kleine Hindernisse wie ein Kabel oder ein Kleidungsstück platziert, die ein Fahren des Roboters beispielsweise durch erhöhten Schlupf der Räder erschweren.

In der Regel wird ein Nutzer diese Störungen nicht absichtlich verursachen und dem Roboter nicht absichtlich Hindernisse in den Weg legen, die den Zugang zur Basisstation und ein sicheres Andocken behindern. Gemäß dem hier beschriebenen Ausführungsbeispiel wird versucht, derartige Probleme frühzeitig zu detektieren und dem Nutzer mitzuteilen, so dass er die Störung beseitigen kann. Der Roboter verfügt beispielsweise über ein Detektionsmodul, welches erkennen kann, dass ein Berechnen und/oder Befahren des Pfades zum Andocken beispielsweise durch eine der zuvor beschriebenen Störungen erheblich erschwert oder unmöglich ist. Hierbei kann beispielsweise der Navigationssensor genutzt werden, um Hindernisse im Andockbereich zu detektieren. Kleine überfahrbare Hindernisse im Andockbereich können beispielsweise mit einem Sensor erkannt werden, der einen Odometriefehler wie z.B. einen Schlupf detektiert.

Um den Nutzer über ein erkanntes Problem zu informieren, besitzt der Roboter zumindest eine Kommunikationsschnittstelle (Mensch-Maschine Schnittstelle, auch *Human-Machine-Interface,* HMI). Dies kann eine direkte Anzeige auf einem Display am Roboter oder ein Tonsignal, insbesondere eine Sprachausgabe, umfassen. Daneben gibt es die Möglichkeit beispielsweise über ein WLAN eine Verbindung zu einem externen Gerät wie beispielsweise einem Smartphone oder einem Tablet-PC aufzubauen, welches ermöglicht eine Information an den Nutzer zu senden. Diese Information umfasst beispielsweise die Art der detektierten Störung.

Zudem kann der Roboter bewerten, wie gravierend die Störung ist, und dies dem Nutzer mitteilen (z.B. geringfügiges Problem (Stufe I, Nutzerinteraktion nicht sofort nötig), relevantes Problem (Sufe II, Nutzerinteraktion empfohlen/sinnvoll), gravierendes Problem (Stufe III, Nutzinteraktion notwendig)). So kann der Nutzer entscheiden wie dringlich sein Eingreifen ist. Beispielsweise kann die Basisstation zu nah an einer Wand platziert sein, was den Andockvorgang stört aber nicht unmöglich macht (Stufe I oder II). In diesem Fall kann der Nutzer entscheiden, dass die Basis an der Position verbleibt und der Roboter ein Andocken versuchen soll. Andererseits kann der Nutzer versehentlich einen Stuhl vor die Basisstation stellen, wodurch ein direktes Andockmanöver unmöglich ist (Stufe III). Dieses Problem kann der Nutzer schnell beheben und so die Funktionsweise des Roboters garantieren. Entsprechend seinem Vorgehen kann der Nutzer dem Roboter über die Kommunikationsschnittstelle eine Rückmeldung geben. Dies umfasst beispielsweise: (i) das Problem ist behoben; (ii) das Problem ignorieren und ein Andocken versuchen; (iii) mit dem Andockmanöver warten, das Problem wird später behoben. Die Klassifizierung einer Störung in drei Stufen ist natürlich nur exemplarisch und kann auch in beliebiger anderer Weise erfolgen.

Um den Nutzer möglichst frühzeitig über Probleme zu informieren, sollte der Roboter die Detektion einer Störung immer nach Verlassen der Basisstation also insbesondere zu Beginn einer neuen Aufgabe durchführen.

Abschließend sei erwähnt, dass die anhand unterschiedlicher Beispiele beschriebenen technischen Merkmale der hier beschriebene Vorrichtungen, Verfahren und Systeme in der Regel miteinander kombinierbar sind, um zu weiteren Ausführungsbeispielen der Erfindung zu gelangen. Derartige Kombinationen sind in der Regel möglich und sinnvoll sofern nicht explizit anderes beschrieben ist. Es versteht sich von selbst, dass jeder der hier beschriebenen Verfahren durch den Roboter ausgeführt wird. Das heißt, der Roboter umfasst eine Robotersteuerung, die in der Regel programmierbar ist und je nach Anwendung so programmiert ist, dass der Roboter das betreffende Verfahren ausführt. Die Robotersteuerung muss nicht zwangsläufig durch eine einzige Komponente des Roboters realisiert sein. Zur Robotersteuerung gehören in der Regel alle Komponenten, welche das nach außen erkennbare Verhalten des Roboters beeinflussen. Die Robotersteuerung muss daher auch nicht physisch in dem mobilen Roboter eingebaut sein, sondern kann sich auch teilweise außerhalb des Roboters in stationären (Steuer-) Geräten, wie z.B. Computer, befinden, welche über eine Kommunikationsverbindung mit dem Roboter verbunden sind.

## Patentansprüche

1. System umfassend einen autonomen mobilen Roboter (100) und eine Basisstation (200) für den Roboter (100),
wobei der Roboter (100) ein Navigationsmodul mit einem Navigationssensor (110) aufweist, das zum Erfassen von geometrischen Merkmalen von Objekten in der Umgebung des Roboters (100) ausgebildet ist, wobei berührungslos Abstände zwischen dem Navigationssensor und Objekten in der Umgebung des Roboters (100) gemessen und basierend auf den gemessenen Abständen geometrische Merkmale der Objekte erfasst werden;
wobei die Basisstation (200) mindestens ein geometrisches Merkmal aufweist, welches basierend auf berührungslose Messung von Abständen von dem Navigationssensor (110) erfasst werden kann,
wobei der Roboter eine mit dem Navigationsmodul gekoppelte Robotersteuerung aufweist, die dazu ausgebildet ist, basierend auf dem mindestens einen geometrischen Merkmalen der Basisstation (200) diese zu identifizieren und/oder zu lokalisieren und eine Andockposition des Roboters (100) zu bestimmen,
wobei die Basisstation (200) mindestens eine Öffnung (230, 230') in ihrer Gehäusewand aufweist,
wobei das mindestens eine geometrische Merkmal mindestens durch eine Größe der Öffnung (230, 230') definiert ist,
**dadurch gekennzeichnet, dass** die Basisstation (200) eine Abdeckung aufweist, welche aus einem für den Navigationssensor (110) transparenten Material besteht und das mindestens eine geometrische Merkmal der Basisstation (200) abdeckt.

2. System gemäß Anspruch 1,
wobei der Navigationssensor (110) ein optischer Sensor ist, der Licht in einem bestimmten Spektrum emittiert.

3. System gemäß Anspruch 2,
wobei die Abdeckung eine auf das Spektrum des vom optischen Sensor emittierten Lichts angepasste Antireflexbeschichtung aufweist.

4. System gemäß einem der Ansprüche 1 bis 3,
wobei die Abdeckung für Licht, das im für einen Menschen sichtbaren Bereich ist, undurchsichtig ist.

5. System gemäß einem der Ansprüche 1 bis 4,
bei dem der Navigationssensor Abstandsmessungen im Wesentlichen in einer horizontalen Ebene mit definiertem Bodenabstand ausführt.

6. System gemäß einem der Ansprüche 1 bis 5,
wobei das Navigationsmodul dazu ausgebildet ist, erfasste geometrische Merkmale von Objekten in einer elektronischen Karte der Umgebung zu speichern.

7. System gemäß einem der Ansprüche 1 bis 6,
wobei das mindestens eine geometrische Merkmal der Basisstation (200) mindestens eines der folgenden umfasst: ein charakteristischer Punkt am Gehäuse der Basisstation (200); eine charakteristische Linie am Gehäuse der Basisstation; ein durch das Gehäuse der Basisstation (200) definiertes Polygon; eine durch das Gehäuse der Basisstation (200) definierte Fläche.

8. System gemäß einem der Ansprüche 1 bis 7,
wobei die Robotersteuerung dazu ausgebildet ist, zur Identifizierung und/oder Lokalisierung der Basisstation (200) dem mindestens einen erfassten geometrischen Merkmal mindestens eine Maßzahl zuzuordnen und diese mit einem zugehörigen Referenzwert zu vergleichen.

9. System gemäß Anspruch 8,
wobei die mindestens eine Maßzahl mindestens eines der folgenden ist: eine Länge, ein Abstand, ein Winkel, ein Verhältnis zweier Längen, ein Verhältnis zweier Abstände, ein Verhältnis zweier Winkel.

10. System gemäß Anspruch 8,
wobei die mindestens eine Maßzahl mindestens eines der folgenden ist: ein Abstand zwischen zwei Punkten, eine Länge einer Linie, ein Abstand eines Punktes von einer Linie, ein Abstand eines Punktes von einer Fläche, ein durch drei Punkte definierter Winkel, ein durch zwei Linien definierter Winkel, ein Verhältnis der Längen zweier Linien.

11. System gemäß einem der vorherigen Ansprüche,
wobei die Basisstation (200) mehrere geometrische Merkmale aufweist, und wobei die mindestens eine Öffnung (230, 230') unsymmetrisch in der Basisstation angeordnet ist, sodass die erfassten geometrischen Merkmale unsymmetrisch in Bezug auf eine vertikale Symmetrieebene sind.

12. System gemäß einem der vorherigen Ansprüche,
wobei die mindestens eine Öffnung (230, 230') durch Anbringen oder Verschieben einer Blende, oder durch Herausbrechen eines Teils der Gehäusewand entlang einer Sollbruchstelle in ihrer Größe oder Form veränderbar ist.

13. System gemäß einem der vorherigen Ansprüche, das weiter umfasst
mindestens eine Komponente, welche durch die mindestens eine Öffnung (230, 230') sichtbar ist, wobei die Komponente für die Detektion der Basisstation (200) genutzt werden kann.

14. System gemäß einem der Ansprüche 1 bis 13,
wobei das Navigationsmodul einen Speicher für mehrere elektronische Karten hat, wobei jede Karte einer bestimmten Basisstation (200) zuordenbar ist und jenes Robotereinsatzgebiet repräsentiert, in dem die bestimmte Basisstation sich befindet.

15. System gemäß einem der Ansprüche 1 bis 14, das weiter aufweist:
mindestens eine weitere Basisstation, wobei die Basisstation (200) sich in einem ersten Robotereinsatzgebiet und die weitere Basisstation sich in einem zweiten Robotereinsatzgebiet befindet,
wobei das Navigationsmodul einen Speicher für mehrere elektronische Karten hat, die einer der Basisstationen zugeordnet sein können, und
wobei das Navigationsmodul nach dem Identifizieren einer bestimmten Basisstation die der identifizierten Basisstation zugeordnete Karte lädt.

## Claims

1. A system comprising an autonomous mobile robot (100) and a base station (200) for the robot (100),
wherein the robot (100) includes a navigation module having a navigation sensor (110), which is designed for detecting geometric features of objects in the surroundings of the robot (100), wherein distances between the navigation sensor and objects in the surroundings of the robot (100) are measured contactlessly and geometric features of the objects are detected based on the measured distances;
wherein the base station (200) includes at least one geometric feature which can be detected based on contactless measurement of distances by the navigation sensor (110),
wherein the robot includes a robot controller coupled to the navigation module, which is designed to identify and/or locate the base station based on the at least one geometric feature of the base station (200) and to determine a docking position of the robot (100),
wherein the base station (200) includes at least one opening (230, 230') in its housing wall,
wherein the at least one geometric feature is at least defined by a size of the opening (230, 230'),
**characterized in that** the base station (200) includes a cover, which consists of a material transparent to the navigation sensor (110) and which covers at least one opening (230, 230').

2. The system as claimed in claim 1,
wherein the navigation sensor (110) is an optical sensor which emits light in a specific spectrum.

3. The system as claimed in claim 2,
wherein the cover includes an anti-reflective coating adapted to the spectrum of the light emitted by the optical sensor.

4. The system as claimed in any one of claims 1 to 3,
wherein the cover is opaque to light which is in the range visible to humans.

5. The system as claimed in any one of claims 1 to 4,
in which the navigation sensor executes distance measurements essentially in a horizontal plane having defined ground clearance.

6. The system as claimed in any one of claims 1 to 5,
wherein the navigation module is designed to store detected geometric features of objects in an electronic map of the surroundings.

7. The system as claimed in any one of claims 1 to 6,
wherein the at least one geometric feature of the base station (200) comprises at least one of the following:
a characteristic point on the housing of the base station (200); a characteristic line on the housing of the base station; a polygon defined by the housing of the base station (200); an area defined by the housing of the base station (200).

8. The system as claimed in any one of claims 1 to 7,
wherein the robot controller is designed to assign at least one measured value to the at least one detected geometric feature and compare it to an associated reference value for identifying and/or locating the base station (200).

9. The system as claimed in claim 8,
wherein the at least one measured value is at least one of the following: a length, a distance, an angle, a ratio of two lengths, a ratio of two distances, a ratio of two angles.

10. The system as claimed in claim 8,
wherein the at least one measured value is at least one of the following: a distance between two points, a length of a line, a distance of a point from a line, a distance of a point from an area, an angle defined by three points, an angle defined by two lines, a ratio of the length of two lines.

11. The system as claimed in any one of the preceding claims,
wherein the base station (200) includes multiple geometric features, and
wherein the at least one opening (230, 230') is arranged asymmetrically in the base station, so that the detected geometric features are asymmetrical in relation to a vertical plane of symmetry.

12. The system as claimed in any one of the preceding claims,
wherein the at least one opening (230, 230') is changeable in its size or shape by attaching or displacing a screen, or by breaking out a part of the housing wall along an intended breakpoint.

13. The system as claimed in any one of the preceding claims, which furthermore comprises
at least one component which is visible through the at least one opening (230, 230'), wherein the component can be used for the detection of the base station (200).

14. The system as claimed in any one of claims 1 to 13,
wherein the navigation module has a memory for multiple electronic maps, wherein each map can be assigned to a specific base station (200) and represents the robot usage area in which the specific base station is located.

15. The system as claimed in any one of claims 1 to 14, which furthermore includes:
at least one further base station, wherein the base station (200) is located in a first robot usage area and the further base station is located in a second robot usage area,
wherein the navigation module has a memory for multiple electronic maps, which can be assigned to one of the base stations, and
wherein the navigation module, after the identification of a specific base station, loads the map associated with the identified base station.

## Revendications

1. Système comprenant un robot (100) mobile autonome et une base de charge (200) pour le robot (100),
dans lequel le robot (100) présente un module de navigation avec un capteur de navigation (110), qui est réalisé pour la détection de caractéristiques géométriques d'objets dans l'environnement du robot (100), dans lequel des distances entre le capteur de navigation et des objets dans l'environnement du robot (100) sont mesurées sans contact et des caractéristiques géométriques des objets sont détectées sur la base des distances mesurées ;
dans lequel la base de charge (200) présente au moins une caractéristique géométrique, laquelle peut être détectée sur la base d'une mesure sans contact de distances par le capteur de navigation (110),
dans lequel le robot présente une commande de robot couplée avec le module de navigation, qui est réalisée pour, sur la base de la ou des caractéristiques géométriques de la base de charge (200), identifier et/ou localiser celle-ci et pour déterminer une position d'amarrage du robot (100),
dans lequel la base de charge (200) présente au moins une ouverture (230, 230') dans sa paroi de boîtier,
dans lequel la ou les caractéristiques géométriques sont définies au moins par une taille de l'ouverture (230, 230'), **caractérisé en ce que** la base de charge (200) présente un recouvrement, lequel est en un matériau transparent pour le capteur de navigation (110) et recouvre la ou les ouvertures (230, 230').

2. Système selon la revendication 1,
dans lequel le capteur de navigation (110) est un capteur optique, qui émet de la lumière dans un spectre déterminé.

3. Système selon la revendication 2,
dans lequel le recouvrement présente un revêtement antireflet adapté au spectre de la lumière émise par le capteur optique.

4. Système selon l'une quelconque des revendications 1 à 3, dans lequel le recouvrement est opaque pour la lumière, qui est dans le domaine visible pour une personne.

5. Système selon l'une quelconque des revendications 1 à 4, dans lequel le capteur de navigation effectue des mesures de distance sensiblement dans un plan horizontal avec distance au sol définie.

6. Système selon l'une quelconque des revendications 1 à 5, dans lequel le module de navigation est réalisé pour enregistrer des caractéristiques géométriques détectées d'objets dans une carte électronique de l'environnement.

7. Système selon l'une quelconque des revendications 1 à 6, dans lequel la ou les caractéristiques géométriques de la base de charge (200) comprennent au moins un des éléments suivants : un point caractéristique au niveau du boîtier de la base de charge (200) ; une ligne caractéristique au niveau du boîtier de la base de charge ; un polygone défini par le boîtier de la base de charge (200) ; une surface définie par le boîtier de la base de charge (200).

8. Système selon l'une quelconque des revendications 1 à 7, dans lequel la commande de robot est réalisée pour affecter au moins une cote pour l'identification et/ou la localisation de la base de charge (200) à la ou aux caractéristiques géométriques détectées et comparer celle-ci avec une valeur de référence correspondante.

9. Système selon la revendication 8,
dans lequel la ou les cotes sont au moins un des éléments suivants : une longueur, une distance, un angle, un rapport entre deux longueurs, un rapport entre deux distances, un rapport entre deux angles.

10. Système selon la revendication 8,
dans lequel la ou les cote sont au moins un des éléments suivants : une distance entre deux points, une longueur d'une ligne, une distance d'un point par rapport à une ligne, une distance d'un point par rapport à une surface, un angle défini par trois points, un angle défini par deux lignes, un rapport entre les longueurs de deux lignes.

11. Système selon l'une quelconque des revendications précédentes,
dans lequel la base de charge (200) présente plusieurs caractéristiques géométriques, et
dans lequel la ou les ouvertures (230, 230') sont agencées de manière asymétrique dans la base de charge, de sorte que les caractéristiques géométriques détectées sont asymétriques par rapport à un plan de symétrie vertical.

12. Système selon l'une quelconque des revendications précédentes,
dans lequel la ou les ouvertures (230, 230') sont modifiables en taille ou en forme par mise en place ou déplacement d'un diaphragme, ou par casse d'une partie de la paroi de boîtier le long d'un point de rupture de consigne.

13. Système selon l'une quelconque des revendications précédentes, qui comprend en outre
au moins un composant, lequel est visible par la ou les ouvertures (230, 230'), dans lequel le composant peut être utilisé pour la détection de la base de charge (200).

14. Système selon l'une quelconque des revendications 1 à 13, dans lequel le module de navigation a une mémoire pour plusieurs cartes électroniques, dans lequel chaque carte peut être affectée à une base de charge (200) déterminée et représente la zone d'intervention de robot, dans laquelle se trouve la base de charge déterminée.

15. Système selon l'une quelconque des revendications 1 à 14, qui présente en outre :
au moins une autre base de charge, dans lequel la base de charge (200) se trouve dans une première zone d'intervention de robot et l'autre base de charge se trouve dans une deuxième zone d'intervention de robot,
dans lequel le module de navigation a une mémoire pour plusieurs cartes électroniques, qui peuvent être affectées à une des bases de charge, et
dans lequel le module de navigation charge, après l'identification d'une base de charge déterminée, la carte affectée à la base de charge identifiée.
